Europäisches Patentamt

European Patent Office

Office européen des brevets

(19)

(11) Veröffentlichungsnummer: **0 243 427**
**B1**

(12) **EUROPÄISCHE PATENTSCHRIFT**

(45) Veröffentlichungstag der Patentschrift: **30.05.90**

(51) Int. Cl.⁵: **G 01 N 15/08**

(21) Anmeldenummer: **86906316.4**

(22) Anmeldetag: **22.10.86**

(86) Internationale Anmeldenummer:
**PCT/EP86/00599**

(87) Internationale Veröffentlichungsnummer:
**WO 87/02771 07.05.87 Gazette 87/10**

(54) VERFAHREN UND VORRICHTUNG ZUR KONTINUIERLICHEN MESSUNG DER POROSITÄT.

(30) Priorität: **24.10.85 DE 3537896**

(43) Veröffentlichungstag der Anmeldung:
**04.11.87 Patentblatt 87/45**

(45) Bekanntmachung des Hinweises auf die
Patenterteilung:
**30.05.90 Patentblatt 90/22**

(84) Benannte Vertragsstaaten:
**AT BE CH DE FR GB IT LI LU NL SE**

(56) Entgegenhaltungen:
**EP-A-0 107 482**
**GB-A-2 018 436**
**US-A-3 466 925**
**US-A-4 198 854**
**US-A-4 311 037**

(73) Patentinhaber: **Gessner & Co. GmbH**
**Postfach 1140**
**D-8206 Bruckmühl/Mangfall 1 (DE)**

(72) Erfinder: **SCHUSTER, Hans, Karl**
**Pfarrweg 7**
**D-8206 Bruckmühl (DE)**
Erfinder: **HEINS, Jens-Peter**
**Eichendorffstrasse 11**
**D-8152 Feldkirchen-Westerham (DE)**
Erfinder: **GOCKEL, Bernhard**
**Kerschensteiner Strasse 52**
**D-8034 Germering (DE)**
Erfinder: **SCHMIDT, Holger**
**Scharfreiterplatz 43**
**D-8000 München 90 (DE)**

(74) Vertreter: **Hoffmann, Klaus, Dr. rer. nat. et al**
**Hoffmann . Eitle & Partner Patentanwälte**
**Postfach 81 04 20 Arabellastrasse 4**
**D-8000 München 81 (DE)**

**Beschreibung**

Die Erfindung betrifft ein Verfahren zur kontinuierlichen Messung der Porosität einer sich bewegenden Bahn aus porösem Material, bei dem die Bahn über einen Meßkopf bewegt wird, diese Bahn zusammen mit dem Meßkopf eine seitlich abgedichtete Meßkammer bildet, innerhalb dieser Meßkammer ein Unterdruck erzeugt wird, dieser Unterdruck laufend gemessen und auf einem möglichst konstanten Wert geregelt wird, infolge des Unterdrucks Luft durch die poröse Bahn in die Meßkammer strömt und aus dieser abgesaugt wird, die Menge der durch die Meßkammer strömenden Luft laufend gemessen, und die Porosität der bewegten Bahn laufend rechnerisch ermittelt wird. Anstelle der Regelung des in der Meßkammer herrschenden Unterdrucks auf einen bestimmten konstanten Wert und der Messung der durch die Meßkammer strömenden Luft kann alternativ auch die Menge der durchströmenden Luft auf einen bestimmten konstanten Wert geregelt und der sich dabei einstellende Unterdruck in der Meßkanner laufend gemessen werden, um daraus die Porosität zu ermitteln.

Die Erfindung betrifft ferner eine Vorrichtung zur Durchführung des Meßverfahrens, mit einem Meßkopf, über den die Bahn bewegt wird, einer von der bewegten Bahn und dem Meßkopf gemeinsam gebildeten, seitlich abgedichteten Meßkammer, einer Einrichtung zur Erzeugung eines Unterdrucks innerhalb dieser Meßkammer, einem der Meßkammer zugeordneten Meßgeber zur laufenden Messung des Unterdrucks, einer an diesen Meßgeber angeschlossenen Regelungseinrichtung zur Regelung des Unterdrucks auf einen möglichst konstanten Wert, einer Meßeinrichtung zur Messung der durch die poröse Bahn und die Meßkammer strömenden Luftmenge und einer elektronischen, mit dieser Meßeinrichtung verbundenen Auswerteinrichtung zur laufenden rechnerischen Ermittlung der Porosität der bewegten Bahn. Entsprechend dem alternativen Meßverfahren kann anstelle des Meßgebers zur Messung des Unterdrucks auch eine Meßeinrichtung zur laufenden Messung der durch die poröse Bahn und die Meßkammer strömenden Luftmenge vorgesehen sein, wobei eine entsprechende Regelungseinrichtung die strömende Luftmenge auf einen bestimmten konstanten Wert regelt, und anstelle der Meßeinrichtung zur Messung der durch die poröse Bahn und die Meßkammer strömenden Luftmenge eine in der Meßkammer angordneter Meßgeber zur laufenden Messung des dort herrschenden Unterdrucks vorhanden ist, so daß dann der Laufend gemessene Unterdruck als Maß für die Porosität dient.

Die laufende Messung der Porosität einer sich bewegenden Bahn ist insbesondere bei der Herstellung von Filterpapieren, Faservliesen und anderen porösen Gewebematerialien von großer Bedeutung, wenn noch während des laufenden Herstellungsprozesses eine On-Line-Qualitätskontrolle erfolgen soll oder bestimmte Herstellungsparameter, wie beispielsweise der Zerkleinerungsgrad oder das Mischungsverhältnis des Rohmaterials, mittels einer Prozeßregelung laufend in Abhängigkeit der gemessenen Porosität verändert werden sollen. Die auf ihre Porosität hin zu überwachende Bahn bewegt sich dabei mit relativ hoher Geschwindigkeit über die Meßstelle. Da die poröse Bahn selbst einen Teil der Meßkammer bildet, in der entweder der herrschende Unterdruck oder die durch sie hindurchströmende Luftmenge konstant gehalten werden soll, muß eine seitliche Abdichtung zwischen dem oberen Rand der Meßkammer und der darübergleitenden Bahn erfolgen. Dies gelingt nur bis zu einem gewissen Grad, so daß die durch Nebenluft bedingten Meßungenauigkeiten durch andere Maßnahmen ausgeglichen werden müssen.

Durch die US—PS 4 311 037 ist eine Vorrichtung zur Messung der Porosität der eingangs erwähnten Art bekannt geworden, bei welcher der in der Meßkammer herrschende Unterdruck bzw. der Volumenstrom der durch die poröse Bahn und die Meßkammer strömenden Luft mittels einer Kontrolleinrichtung, welche ein elektromotorisch angetriebenes Unterdruckgebläse ansteuert, auf einen bestimmten konstanten Wert regelt. Es hat sich jedoch gezeigt, daß eine derartige einfache Regelung nicht in der Lage ist, die schnellen Schwankungen des in der Meßkammer herrschenden Unterdrucks bzw. der durch sie hindurchströmenden Luftemenge so auszugleichen, daß die für eine hinreichend genaue Porositätsmessung erforderliche Randbedingung, nämlich entweder den Untedruck oder die strömende Luftmenge konstant zu halten, als erfüllt angesehen werden kann. Die Folge sind Meßfehler in einer Größenordnung, die bei hohen Anforderungen an die Genauigkeit der Porositätsmessung nicht mehr toleriert werden können. Überdies werden bei der bekannten Meßvorrichtung Schwankungen von Qualitätsparametern der porösen Bahn sowie der Bahngeschwindigkeit nicht berücksichtigt, was sich in zusätzlichen Meßfehlern niederschlägt.

Es ist daher Aufgabe vorliegender Erfindung, ein Verfahren zur kontinuierlichen Messung der Porosität einer sich bewegenden Bahn sowie eine entsprechende Vorrichtung zur Durchführung des Meßverfahrens vorzuschlagen, die sich insbesondere durch eine erhöhte Meßgenauigkeit auszeichnen und bei denen die geschilderten Nachteile nicht auftreten.

Bei der Lösung dieser Aufgabe wird von einem Verfahren bzw. einer Vorrichtung der eingangs erwähnten Art ausgegangen und durch die in den kennzeichnenden Teilen der Patentansprüche 1 und 2 bzw. 7 und 8 aufgeführten Merkmale gelöst.

Bei dem erfindungsgemäßen Verfahren wird der in der Meßkammer herrschende Unterdruck bzw. die durch die Meßkammer strömende Luftmenge mittels einer Regeleinrichtung möglichst konstant gehalten, die dabei unvermeidbar auftretenden Regelabweichungen werden jedoch bewußt in Kauf genommen und bei der Ermittlung der Porosität aus den gemessenen Werten rechnerisch berücksichtigt. Arbeitet das Verfahren beispielsweise bei konstanten Unterdruck in der Meßkammer und dient die Menge der durch die Meßkammer strömenden Luft als Grundlage für die Ermittlung der Porosität der Bahn, so wird zusätzlich der momentan herrschende Unterdruck gemessen und geht dessen zeitlicher Verlauf in Form einer Korrekturfunktion in die Berechnung der Porosität mit ein. Dies hat den großen Vorteil, daß die Regelung des Unterdrucks auf einen konstanten Wert nur so genau sein muß, wie es mit einem wirtschaftlich vertretbaren Aufwand möglich ist, die erzielte Meßgenauigkeit jedoch trotzdem wesentlich höher ist, als dies bei herkömmlichen Meßverfahren ohne zusätzliche Berücksichtigung der zeitlichen Schwankungen des Unterdrucks der Fall ist. Mit dem erfindungsgemäßen Verfahren ist auch dann noch eine genaue Porositätsmessung möglich, wenn Regelabweichungen bis zu etwa 50 Prozent zugelassen werden.

Auch bei der Erfindungsgemäßen Vorrichtung zur Durchführung der Kontinuierlichen Porositätsmessung wird die wesentliche Verbesserung der Meßgenauigkeit mit relativ einfachen technischen Mitteln erzielt: Es muß lediglich ein zusätzlicher Meßgeber zur laufenden Messung des Unterdrucks der Meßkammer zugeordnet werden, der direkt mit der Auswerteinrichtung zur rechnerischen Ermittlung der Porosität der bewegten Bahn aus der ebenfalls gemessenen Luftmenge verbunden ist, so daß der zeitliche Verlauf des Unterdrucks bei der Porositätsermittlung berücksichtigt werden kann. Arbeitet die Meßvorrichtung mit konstanter Luftmenge anstelle konstanten Unterdrucks, so muß eine zusätzliche Meßeinrichtung zur laufenden Messung der durch die poröse Bahn und die Meßkammer strömenden Luftmenge vorgesehen und direkt mit der Auswerteinrichtung verbunden sein, so daß der zeitliche Verlauf der strömenden Luftmenge berücksichtigt werden kann.

Zweckmäßigerweise erfolgt die Messung der durch die Meßkammer strömenden Luftmenge über eine Volumenstrommessung oder eine Messung des Massenstroms. Bei der entsprechenden Vorrichtung ist dann eine Volumenstrom- oder Massenstrom-Meßeinrichtung vorgesehen. Derartige Meßeinrichtungen stehen als elektrisches Anemometer oder thermischer Massendurchflußmesser zur Verfügung.

Die Genauigkeit der Porositätsmessung kann noch weiter gesteigert werden, wenn zusätzlich Qualitätsparameter der Bahn gemessen und bei der rechnerischen Ermittlung der Porosität ebenfalls berücksichtigt werden. Solche, die Porosität beeinflussende Qualitätsparameter sind beispielsweise Flächenmasse, Feuchte, Dicke sowie spezifisches Volumen des porösen Bahnmaterials. Sollen diese Paramter mit berücksichtigt werden, sind zusätzliche Meßsensoren an der Meßvorrichtung erforderlich, welche mit der Auswerteinrichtung verbunden sind.

Schwankungen der Relativgeschwindigkeit zwischen bewegter Bahn und Meßkopf können ebenfalls Ursache von Meßfehlern sein. Bei der Erfingung wird deshalb zusätzlich auch die Geschwindigkeit der bewegten Bahn von einer Geschwindigkeits-Meßeinrichtung erfaßt und der Auswerteinrichtung zugeführt, um bei der rechnerischen Ermittlung der Porosität in Form eines zeitabhängigen Korrekturfaktors berücksichtigt zu werden.

Bei einer besonders vorteilhaften Ausführung der erfindungsgemäßen Meßvorrichtung kommt ein Mikrorechner als Auswerteinrichtung zum Einsatz. Ein solcher handelsüblicher Mikororechner ist in der Lage, die bei der rechnerischen Ermittlung der Porosität aus den verschiedenen erfaßten Meßgrößen notwendigen komplexen Berechnungen so schnell vorzunehmen, daß die Porosität auch von mit hoher Geschwindigkeit am Meßkopf vorbeibewegten Bahnen ohne zeitliche Verzögerung ermittelt wird. Die bei herkömmlichen Verfahren infolge der zeitbehafteten Regulung des in der Meßkammer herrrschenden Unterdrucks, bzw. der durch sie strömenden Luftmenge auftretende zeitliche Verschiebung zwischen Porositätsänderung und Anzeige wird bei vorliegender Erfindung durch die zeitechte Erfassung von Regelungsungenauigkeiten und ihre sofortige Berücksichtigung bei der Berechnung der Porosität vermieden. Es steht somit erstmals ein echtes On-Line-Meßsignal für die Bahnporösität zur Verfügung, was das erfindungsgemäße Verfahren bzw. Vorrichtung besonders für den Einsatz innerhalb einer Prozeßregelung bei der Bahnherstellung prädestiniert. Die Erfindung bietet jedoch gleichermaßen Vorteile bei der schnellen Detektion von eventuell vorhandenen Löchern im Bahnmaterial, der Erfassung der lokalen Verteilung der Porosität (sogenannte "Wolkigkeit" des Materials) sowie der Erkennung von Verschmutzungen in bzw. auf der Bahn.

Bei einer weiteren vorteilhaften Ausbildung der Erfindung ist die Regelungseinrichtung für die Einhaltung eines konstanten Unterdrucks in der Meßkammer bzw. einer konstanten, durch sie hindurchfließenden Luftmenge in den die Auswerteinrichtung darstellenden Mikrorechner intergriert. Hierdurch wird die Regelungsgenauigkeit verbessert und der Aufbau der Meßvorrichtung gleichzeitig vereinfacht.

Zur Vermeidung von Verschmutzungen der empfindlichen Meßsysteme kann ein Filter zwischen der Meßkammer und der Meßeinrichtung zur Messung der strömenden Luftmenge vorgesehen sein.

Das erfindungsgemäße Verfahren sowie die Vorrichtung zur Durchführung des Verfahrens werden nachstehend anhand der beigefügten Zeichnungen beispielhaft erläutert. Es zeigen:

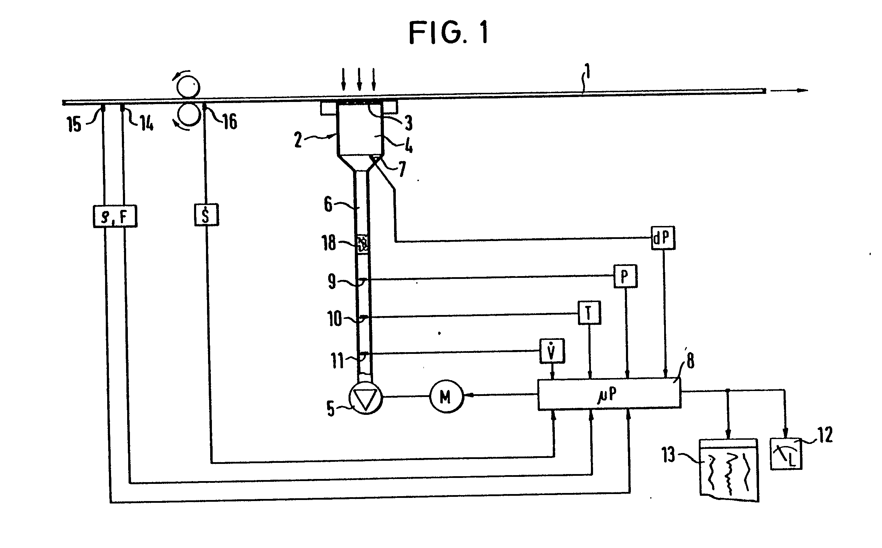

Fig. 1 eine Vorrichtung zur kontinuierlichen Messung der Porosität gemäß der Erfingung, wobei der in der Meßkammer des Meßkopfes herrschende Unterdruck konstant gehalten und der volumenstrom sowie die Temperatur und der absolute Druck der durch die Meßkammer strömenden Luft gemessen und daraus die Porosität laufend ermittelt wird, in einem Prinzipbild;

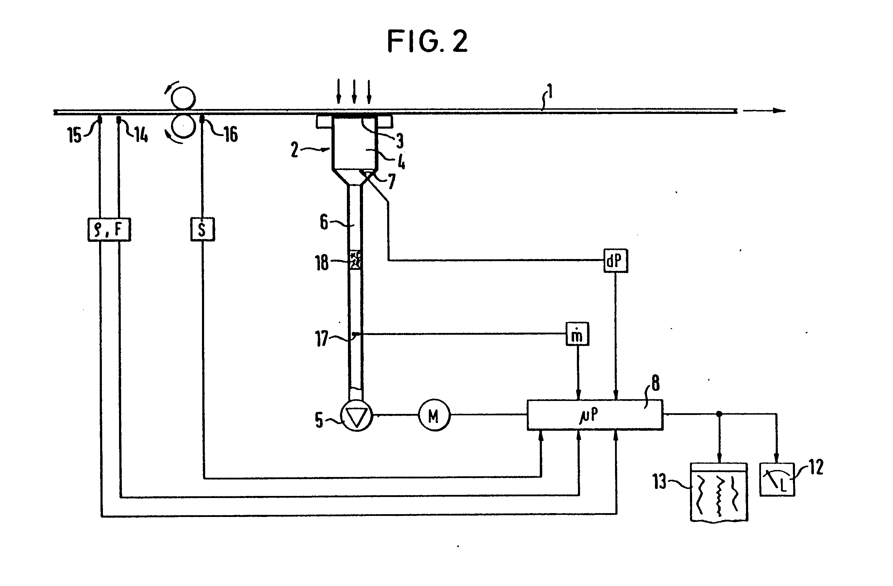

Fig. 2 im wesentlichen die Vorrichtung gemäß Fig. 1, wobei jedoch anstelle des Volumenstroms, der Temperatur und des absoluten Drucks der Massenstrom der durch die Meßkammer strömenden Luft gemessen und hieraus die Porosität ermittelt wird, ebenfalls in einem Prinzipbild.

Die in Fig. 1 dargestellte poröse Bahn 1 wird über einen Meßkopf 2 bewegt. Die Oberseite dieses Meßkopfes 2 wird von einer Meßplatte 3 gebildet, in welcher eine Anzahl von Meßöffnungen vorgesehen sind. Die bewegte Bahn 1 wird auf den Rand der Meßplatte 3 mittels einer nicht dargestellten Ansaugvorrichtung angesaugt, so daß der Meßkopf 2 gemeinsam mit der Bahn 1 eine seitlich abgedichtete Meßkammer bildet. Ein elektromotorisch angetriebenes Sauggebläse 5 erzeugt einen Unterdruck innerhalb der Meßkammer 4. Infolge dieses Unterdrucks strömt Luft durch die poröse Bahn 1 hindurch in die Meßkammer 4 ein und wird über einen Meßkanal 6 aus ihr abgesaugt. Der in der Meßkammer 4 herrschende Unterdruck wird laufend von einem Meßgeber 7 gemessen, welcher mit einem Mikroechner 8 verbunden ist. Innerhalb des Meßkanals 6 sind weitere meßgeber zur Erfassung des absoluten Drucks der strömenden Luft 9 und deren Temperatur 10 vorgesehen. Die Menge der durch die Meßkammer 4 und den Meßkanal 6 strömenden Luft wird mittels einer Volumenstrom-Meßeinrichtung 11 gemessen. Die Meßgeber 9 und 10 sowie die volumenstrom-Meßeinrichtung 11 sind ebenfalls an den Mikrorechner 8 angeschlossen.

Der Meßgeber 7 für den Unterdruck der Mikrorechner 8 und der von letzterem angesteuerte Elektromotor des Sauggebläses 5 bilden einen Regelkreis, mit dessen Hilfe der in der Meßkammer 4 herrschende Unterdruck möglichst konstant gehalten wird. Aus den von den Meßgebern 9 und 10 gemessenen Werten für den absoluten Druck und die Temperatur der durch den Meßkanal 6 geleiteten Luft sowie dem von der Meßeinrichtung 11 gelieferten, deren Volumenstrom proportionalem Meßsignal errechnet der Mikrorechner 8 laufend die Porosität der über den Meßkopf 2 gleitenden Bahn 1. Die auf diese Weise gemessene Porosität wird auf einem Anzeigegerät 12 angezeigt. Zur Kontrolle der lokalen Schwankungen der Porosität entlang der Bahn 1 wird der kontinuierlich gemessene Porositätswert zudem von einem Meßschreiber 13 aufgezeichnet.

Der Mikrorechner 8 verwendet das vom Meßgeber 7 gelieferte Meßsignal für den in der Meßkammer 4 herrschenden Unterdruck nicht nur zur Regelung desselben auf einen bestimmten konstanten Wert, sondern gleicht die trotz Regelung unvermeidlich auftretenden Regelabweichungen durch zusätzliche Berücksichtigung des zeitlichen Verlaufs des Unterdrucks bei der rechnerischen Ermittlung der Porosität aus. Der Mikrorechner 8 erfüllt hier also Doppelfunktion: Er ist sowhol Auswerteinrichtung zur Ermittlung der Porosität als auch Regeleinrichtung zum Konstanthalten des in der Meßkammer 4 herrschenden Unterdrucks.

Es sind zusätzliche Meßgeber 14, 15 zur Messung der Feuchte und des spezifischen Volumens der bewegten Bahn 1 vorgesehen, welche ebenfalls mit dem Mikrorechner 8 elektrisch verbunden sind. Zusätzlich angeschlossen ist ein Geschwindigkeitsmesser 16 zur Erfassung der momentanen Geschwindigkeit der über den Meßkopf 2 bewegten Bahn 1. Diese zusätzlichen Meßwerte werden ebenfalls vom Mikrorechner 8 in Form von entsprechenden Korrekturfaktoren in die rechnerische Ermittlung der Porosität einbezogen. Zum Schutz der empfindlichen Meßsysteme ist im Meßkanal 6 ein Filter 18 vorgesehen.

Bei der in Fig. 2 dargestellten Anordnung zum Messen der Porosität der bewegten Mahn 1 kommt anstelle der Meßgeber 9 und 10 für den absoluten Druck bzw. die Temperatur sowie der Volumenstrom-Meßeinrichtung 11 ein thermischer Massendurchflußmesser 17 zum Einsatz, mit welchem die durch die poröse Bahn 1 angesaugte und durch die Meßkammer 4 strömende Luftmenge gemessen wird. Dabei wird wiederum der in der Meßkammer 4 herrschende Unterdruck möglichst konstant gehalten. Der gemessene Massenstrom der strömenden Luft dient als Maß für die Porosität, welche vom Mikrorechner 8 rechnerisch ermittelt wird, wobei die trotz der Regelung verbleibenden Druckschwankungen in Form eines Korrekturfaktors, der eine zeitliche Funktion des gemessenen Unterdrucks ist, rechnerisch ausgeglichen werden.

Verzeichnis der verwendeten Bezugsziffern
1 Bahn
2 Meßkopf
3 Meßplatte
4 Meßkammer
5 Sauggebläse
6 Meßkanal
7 Meßgeber (für Unterdruck)
8 Mikrorechner
9 Meßgeber (für Absolutdruck)
10 Meßgeber (für Lufttemperatur)
11 Volumenstrom-Meßeinrichtung
12 Anzeigegerät (für Porosität)
13 Meßschreiber
14 Meßgeber (für spezifisches Volumen)
15 Meßgeber (für Feuchte)
16 Geschwindkigkeitsmesser
17 Massendurchflußmesser
18 Filter

**Patentansprüche**

1. Verfahren zur kontinuierlichen Messung der Porosität einer sich bewegenden Bahn (1) aus porösem Material, bei dem
die Bahn über einen Meßkopf (2) bewegt wird,
diese Bahn zusammen mit dem Meßkopf eine seitlich abgedichtete Meßkammer (4) bildet,
innerhalb dieser Meßkammer ein Unterdruck erzeugt wird,
dieser Unterdruck laufend gemessen und auf einen möglichst konstanten Wert geregelt wird,
infolge des Unterdrucks Luft durch die poröse Bahn in die Meßkammer strömt und aus dieser abgesaugt wird,

die Menge der durch die Meßkammer strömenden Luft gemessen

und die Porosität der bewegten Bahn laufend rechnerisch ermittelt wird, dadurch gekennzeichnet, daß

zusätzlich die Geschwindigkeit der bewegten Bahn (1) laufend gemessen und

bei der Ermittlung der Porosität der zeitlich Verlauf des in der Meßkammer herrschenden Unterdrucks und die gemessene geschwindigkeit der Bahn (1) berücksichtigt werden

2. Verfahren zur kontinuierlichen Messung der Porosität einer sich bewegenden Bahn aus porösem Material, bei dem

die Bahn über einen Meßkopf (2) bewegt wird,

diese Bahn zusammen mit dem Meßkopf eine seitlich abgedichtete Meßkammer bildet,

innerhalb dieser Meßkammer ein Unterdruck erzeugt wird,

infolge des Unterdrucks Luft durch die poröse Bahn in die Meßkammer strömt und aus dieser abgesaugt wird,

die Menge der durch die Meßkammer strömenden Luft gemessen

und auf einen möglichst konstanten Wert geregelt wird,

der in der Meßkammer herrrschende Unterdruck laufend gemessen

und die Porosität der bewegten Bahn laufend rechnerisch ermittelt wird, dadurch gekennzeichnet, daß

zusätzlich die Geschwindigkeit der bewegten Bahn laufend (1) gemessen und

bei der Ermittlung der Porosität der zeitliche Verlauf der durch die Meßkammer strömenden Luftmenge und die gemessene Geschwindigkeit der Bahn berücksichtigt werden

3. Verfahren nach Anspruch 1 oder 2, dadurch gekennzeichnet, daß Regelabweichungen bis zu 50 Prozent zugelassen werden.

4. Verfahren nach einem der Ansprüche dadurch gekennzeichnet, daß die Messung der durch die Meßkammer (4) strömenden Luftmenge über eine Volumenstrommessung erfolgt.

5. Verfahren nach einem der Ansprüche 1, 2 oder 3, dadurch gekennzeichnet, daß die Messung der durch die Meßkammer (4) strömenden Luftmenge über eine Massenstrommessung erfolgft.

6. Verfahren nach einem der Ansprüche 1 bis 5, dadurch gekennzeichnet, daß zusätzlich Qualitätsparameter der bewegten Bahn (1) gemessen und bei der Ermittlung der Porosität berücksichtigt werden.

7. Vorrichtung zur kontinuierlichen Messung der Porosität einer sich bewegenden Bahn (1) aus porösem Material gemäß dem Verfahren nach Anspruch 1, mit

einem Meßkopf (2), über den die Bahn (1) bewegt wird,

einer von der bewegten Bahn und dem Meßkopf gemeinsam gebildeten, seitlich abgedichteten Meßkammer (4),

einer Einrichtung (5) zur Erzeugung eines Unterdrucks innerhalb dieser Meßkammer,

einem der Meßkammer zugeordneten Meßgeber (7) zur laufenden Messung des dort herrschenden Unerdrucks,

einer an diesen Meßgeber angeschlossenen Regelungseinrichtung (11, 17, 8, 5) zur Regelung des Unterdrucks auf einen möglichst konstanten Wert,

einer Meßeinrichtung (11, 17) zur laufenden Messung der Durch die poröse Mahn und die Meßkammer strömenden Luftmenge

und einer elektronischen, mit dieser Meßeinrichtung verbundenen Auswerteinrichtung (8) zur laufenden rechnerischen Ermittlung der Porosität der bewegten Bahn, dadurch gekennzeichnet, daß

die Auswerteinrichtung (8) mit dem Meßgeber (7) zur laufenden Messung des Unterdrucks in der Meßkammer (4) verbunden ist,

eine Geschwindigkeits-Meßeinrichtung (16) zur laufenden Erfassung der Geschwindkigkeit der bewegten Bahn (1) vorgesehen und ebenfalls mit der Auswerteinrichtung verbunden ist und

die Auswerteinrichtung (8) derart ausgebildet ist, daß der zeitliche Verlauf des Unterdrucks und die Bahngeschwindigkeit bei der rechnerischen Ermittlung der Porosität berücksichtigt werden.

8. Vorrichtung zur kontinuierlichen Messung der Porosität einer sich bewegenden Bahn aus porösem Material gemäß dem Verfahren nach Anspruch 2, mit

einem Meßkopf, über den die Bahn bewegt wird,

einer von der bewegten Bahn und dem Meßkopf gemeinsam gebildeten, seitlich abgedichteten Meßkammer,

einer Einrichtung zur Erzeugung eines Unterdrucks innerhalb dieser Meßkammer,

einer Meßeinrichtung zur laufenden Messung der durch die poröse Bahn und die Meßkammmer strömenden Luftmenge,

einer an diese Meßeinrichtung angeschlossenen Regelungseinrichtung zur Regelung der strömenden Luftmenge auf einen bestimmten konstanten Wert,

einem der Meßkammer zugeordneten Meßgeber zur laufenden Messung des dort herrschenden Unterdrucks,

und einer elektronischen, mit diesem Meßgeber verbundenen Auswerteinrichtung zur laufenden rechnerischen Ermittlung der Porosität der bewegten Bahn, dadurch gekennzeichnet, daß

die Auswerteinrichtung mit der Meßeinrichtung zur laufenden Messung der durch die Meßkammer strömenden Luftmenge verbunden ist,

eine Geschwindigkeits-Meßeinrichtung (16) zur laufenden Erfassung der Geschwindigkeit der bewegten Bahn (1) vorgesehen und ebenfalls mit der Auswerteinrichtung verbunden ist und

die Auswerteinrichtung derart ausgebildet ist, daß der zeitliche Verlauf der Luftmenge bei der rechnerischen Ermittlung der Porosität berücksichtigt werden.

9. Vorrichtung nach Anspruch 7 oder 8, dadurch gekennzeichnet, daß die Meßeinrichtung zu Messung der Luftmenge eine Volumenstrom-Meßeinrichtung (11) ist.

10. Vorrichtung nach Anspruch 9, dadurch gekennzeichnet, daß die Meßeinrichtung zur Messung der Luftmenge ein elektrisches Anemometer ist.

11. Vorrichtung nach Anspruch 7 oder 8, dadurch gekennzeichnet, daß die Meßeinrichtung zur Messung der Luftmenge eine Massenstrom-Meßeinrichtung (17) ist.

12. Vorrichtung nach Anspruch 11, dadurch gekennzeichnet, daß die Meßeinrichtung eine thermische Massendurchfluß-Meßeinrichtung (17) ist.

13. Vorrichtung nach einem der Ansprüche 7 bis 12, dadurch gekennzeichnet, daß zusätzliche Meßsensoren (14, 15) zur Erfassung von Qualitätsparametern der bewegten Bahn vorgesehen und mit der Auswerteinrichtung verbindung sind.

14. Vorrichtung nach einem der Ansprüche 7 bis 13, dadurch gekennzeichnet, daß die Auswerteinrichtung ein Mikrorechner (8) ist.

15. Vorrichtung nach Anspruch 14, dadurch gekennzeichnet, daß der Mikrorechner gleichzeitig die Regelungseinrichtung für den Unterdruck bzw. die konstante Luftmenge umfaßt.

16. Vorrichtung nach einem der Ansprüche 7 bis 15, dadurch gekennzeichnet, daß zwischen der Meßkammer (4) und der Meßeinrichtung zur Messung der strömenden Luftmenge ein Filter (18) vorgesehen ist.

**Revendications**

1. Procédé pour la mesure en continu de la porosité d'un ruban (1) en mouvement composé d'un matériau poreux, dans lequel:

le ruban est déplacé au-dessus d'une tête de mesure (2),

ce ruban forme avec la tête de mesure une chambre de mesure (4) fermée de manière étanche latéralement,

un vide est produit à l'intérieur de cette chambre de mesure,

ce vide est mesuré en continu

et réglé à une valeur aussi constante que possible,

de l'aire s'écoulant, par suite du vide, à travers le ruban, dans la chambre de mesur, et étant aspiré hors de celle-ci,

la quantité d'air s'écoulant dans la chambre de mesure faisant l'objet d'une mesure,

et la porosité du ruban en mouvement étant déterminée par calcul, caractérisé en ce

qu'en plus, on mesure en continu la vitesse du ruban (1) en mouvement et

que, lors de la détermination de la porosité, on prend en considération l'évolution temporelle du vide régnant dans la chambre de mesure et la vitesse mesurée du ruben (1).

2. Procédé pour la mesure en continu de la porosité d'un ruban en mouvement composé d'un matériau poreux, dans lequel:

le ruban est déplacé au-dessus d'une tête de mesure,

ce ruban forme avec la tête de mesure une chambre de mesure fermée de manière étanche latéralement,

un vide est produit à l'intérieur de cette chambre de mesure,

de l'air s'écoulant, par suite de vide, à travers le ruban dans la chambre de mesure, et étant aspiré hors de celle-ci,

la quantité d'air s'écoulant dans la chambre de mesure fiasant l'objet d'une mesure en continu

et est réglée à une valeur aussi constante que possible,

le vide régnant dans la chambre de mesure est mesuré en continu

et la porosité du ruban en mouvement étant déterminée par calcul, caractérisé en ce

qu'en plus, on mesure en continu la vitesse du ruban (1) en mouvement et

que, lors de la détermination de la porosité, on prend en considération l'évolution temporelle de la quantité d'air s'écoulant dans la chambre de mesure et la vitesse mesurée du ruban.

3. Procédé selon la revendication 1 ou 2, caractérisé en ce que des écarts de régulation allant jusqu'à 50% sont tolérés.

4. Procédé selon l'une des revendications 1, 2 ou 3, caractérisé en ce que la mesure de la quantité d'air s'écoulant dans la chambre de mesure (4) s'effectue par l'intermédiaire d'un mesure du débit volume.

5. Procédé selon l'une des revendications 1, 2 ou 3, caractérisé en ce que la mesure de la quantité d'air s'écoulant dans la chambre de mesure (4) s'effectue par l'intermédiaire d'une mesure du débit masse.

6. Procédé selon l'une des revendications 1 à 5, caractérisé en ce que l'on mesure des paramètres qualitatifs supplémentaires du ruban (1) en mouvement et qu'on les prend en considération lors de la détermination de la porosité.

7. Dispositif pour la mesure en continu de la porisité d'un ruban (1) en mouvement composé d'un matériau poreux, suivant la procédé selon la revendication 1, comportant:

une tête de mesure (2), sur laquelle le ruban (1) est déplacé,

une chambre de mesure (4), formée conjointement par le ruban en mouvement et par la tête de mesure et fermée de manière étanche latéralement,

un dispositif (5) de production d'un vide à l'intérieur de cette chambre de mesure,

un capteur de mesure (7) associé à la chambre de mesure, en vue de mesurer en continu le vide y régnant,

un dispositif de régulation (11, 17, 8, 5), raccordé à ce capteur de mesure et destiné à la régulation du vide à une valeur aussi constante que possible,

un dispositif de mesure (11, 17) destiné à la mesure en continu de la quantité d'airs s'écoulant à travers le ruban poreux et la chambre de mesure,

et un dispositif d'exploitation (8), relié à ce dispositif de mesure en vue de détemination en continu par le calcul de la porosité du ruban en mouvement, caractérisé en ce

le dispositif d'exploitation (8) est relié au capteur de mesure (7) en vue de la mesure en continu du vide dans la chambre de mesure (4),

un dispositif de mesure de vitesse (16) est prévu en vue de la mesure en continu de la vitesse du ruban (1) en mouvement et est également relié au dispositif d'exploitation, et

le dispositif d'exploitation (8) étant réalisé de telle façon que, lors de la détermination par calcul de la porosité, on prend en considération l'évolution temporelle du vide et la vitesse mesurée du ruban.

8. Dispositif pour la mesure en continu de la porisité d'un ruban en mouvement composé d'un matériau poreux, suivant le procédé selon la revendication 2, comportant:

une tête de mesure, sur laquelle le ruban est déplacé,

une chambre de mesure, formée conjointement par le ruban en mouvement et par la tête de mesure et fermée de manière étanche latéralement,

un dispositif de production d'un vide à l'intérieur de cette chambre de mesure,

un dispositif de mesure, en vue de mesurer en continu la quantité d'air s'écoulant à travers le ruban poreux et la chambre de mesure,

un dispositif de régulation, raccordé à ce capteur de mesure et destiné à la régulation de la quantité d'air en écoulement à une valeur aussi constante que possible,

un capteur de mesure associé à la chambre de mesure, en vue de la mesure en continu du vide y régnant,

et un dispositif électronique d'exploitation, relié à ce capteur de mesure en vue de détermination en continu par le calcul de la porosité du ruban en mouvement, caractérisé en ce

le dispositif d'exploitation est relié au dispositif de mesure en vue de la mesure en continu de la quantité d'air s'écoulant dans la chambre de mesure,

un dispositif de mesure de vitesse (16) est prévu en vue de la mesure en continu de la vitesse du ruban (1) en mouvement et est également relié au dispositif d'exploitation, et

le dispositif d'exploitation étant réalisé de telle façon que, lors de la détermination par calcul de la porosité, on prend en considération l'évolution temporelle de la quantité d'air.

9. Dispositif selon la revendication 7, ou 8, caractérisé en ce que le dispositif de mesure destiné à la mesure de la quantité d'air est un dispositif de mesure du débit volume (11).

10. Procédé selon la revendication 9, caractérisé en ce que le dispositif de mesure affecté à la mesure de la quantité d'air est un anémomètre électrique.

11. Pricédé selon la revendication 7 ou 8, caractérisé en ce que le dispositif de mesure destiné à la mesure de la quantité d'air est un dispositif de mesure du débit masse (17).

12. Procédé selon la revendication 11, caractérisé en ce que le dispositif de mesure est un dispositif de mesure thermique du débit masse (17).

13. Procédé selon l'une des revendications 7 à 12, caractérisé en ce que des capteurs de mesure (14, 15) supplémentaires destinés à la mesure de paramètres qualitatifs du ruban en mouvement sont prévus et reliés au dispositif d'exploitation.

14. Procédé selon l'une des revendications 7 à 13, caractérisé en ce que le dispositif d'exploitation est un micro-ordinateur (8).

15. Procédé selon la revendication 14, caractérisé en ce que le micro-ordinateur comprend en même temps le dispositif de régulation du vide ou de la quantité, d'air constante.

16. Procédé selon l'une des revendications 7 à 15, caractérisé en ce qu'un filtre (18) pour la mesure de la quantité d'air en écoulement est prévu entre la chambre de mesure (4) et le dispositif de mesure.

**Claims**

1. Method for continuously measuring porosity of a moving strip (1) of porous material, in which:

the strip is moved over a measuring head (2);

the strip forms a laterally sealed measuring chamber (4) in combination with the measuring head;

a low pressure region is produced within this measuring chamber;

the low pressure is continuously measured

and controlled to a value which is as constant as possible;

as a result of the low pressure, air flows through the porous strip into the measuring chamber and is sucked therefrom;

the amount of air flowing through the measuring chamber is measured

and the porosity of the moving strip is continuously computed from this measured value;

characterized in that additionally the speed of the moving strip (1) is continuously measured, and

in the evaluation of the porosity allowance is made for the temporal variation of the reduced pressure prevailing in the measuring chamber and the measured speed of the strip (1).

2. Method for continuously measuring porosity of a moving strip of porous material, in which:

the strip is moved over a measuring head;

the strip forms a laterally sealed measuring chamber in combination with the measuring head;

a low pressure region is produced within this measuring chamber;

as a result of the low pressure, air flows through the porous strip into the measuring chamber and is sucked therefrom;

the amount of air flowing through the measuring chamber is continuously measured

and is controlled to a value which is as constant as possible;

the low pressure present in the measuring chamber is continuously measured;

and the porosity of the moving strip is continuously computed, characterized in that:

additionally the speed of the moving strip (1) is continuously measured;

in the evaluation of the porosity allowance is made for the temporal variation of the amount of air flowing through the measuring chamber and the measured speed of the strip.

3. Method according to claim 1 or 2, characterized in that control errors up to 50% are permitted.

4. Method according to claim 1, 2 or 3, characterized in that the measuring of the amount of air flowing through the measuring chamber (4) is achieved by volume flow measurement.

5. Method according to claim 1, 2 or 3, characterized in that the measurement of the amount of air flowing through the measuring chamber (4) is achieved by mass flow measurement.

6. Method according to any of claims 1 to 5, characterized in that additional quality parameters of the moving strip (1) are measured and are allowed for in the computation of the porosity.

7. Apparatus for continuously measuring porosity of a moving strip (1) of porous material according to the method of claim 1 comprising:

a measuring head (2), across which the strip (1) is moved;

a laterally sealed measuring chamber (4) formed from the combination of the moving strip and the measuring head;

an arrangement (5) for producing low pressure within this measuring chamber;

a measurement sensor (7) provided for the measuring chamber for continuous measurement of the low pressure prevailing there;

a control arrangement (11, 17, 8, 5) connected to this measurement sensor for control of the low pressure to a value which is as constant as possible;

a measuring arrangement (11, 17) for continuously measuring the amount of air flowing through the porous strip and the measuring chamber,

and an electronic evaluating arrangement (8) connected to this measuring arrangement for continuous computation of the porosity of the moving strip, characterized in that:

the evaluation arrangement (8) is connected to the measuring sensor (7) for continuous measurement of the reduced pressure in the measuring chamber (4),

a speed measuring arrangement (16) is provided for continuous determination of the speed of the moving strip (1), and is likewise connected to the evaluation arrangement, and

evaluating arrangement (8) is constructed in such manner that the temporal variation of the reduced pressure and the strip speed are taken into account in the computation of the porosity.

8. Apparatus for continuously measurement of the porosity of a moving strip of porous material according to the method of claim 2 comprising:

a measuring head across which the strip is moved;

a laterally sealed measuring chamber formed from the combination of the moving strip and the measuring head;

an arrangement for producing low pressure within this measuring chamber;

a measuring arrangement for continuous measurement of the amount of air flowing through the porous strip and the measurement chamber;

a control arrangement connected to this measuring arrangement for controlling the amount of air-flow to value which is as constant as possible;

a measurement sensor provided for the measuring chamber for continuous measurement of the low pressure prevailing therein;

and an electronic evaluating arrangement connected to this measurement sensor for continuous computation of the porosity of the moving strip, characterized in that:

the evaluation arrangement is connected to the measuring arrangement for continuous measurement of the amount of air flowing through the measuring chamber;

a speed measuring arrangement (16) is provided for continuous determination of the speed of the moving strip (1) and is likewise connected to the evaluation arrangement, and

the evaluating arrangement is constructed in such manner that the temporal variation of the amount of air is taken in to account in the computation of the porosity.

9. Apparatus according to claim 7 or 8, characterized in that the measuring arrangement for measuring the amount of air is a volume flow measuring arrangement (11).

10. Apparatus according to claim 9, characterized in that the measuring arrangement for measuring the amount of air is an electrical anemometer.

11. Apparatus according to claim 7 or 8, characterized in that the measuring arrangement for measuring the amount of air is a mass flow measuring arrangement (17).

12. Apparatus according to claim 11, characterized in that the measuring arrangement is a thermal mass flow measuring arrangement (17).

13. Apparatus according to any of claims 7 to 12, characterized in that additional measuring sensors (14, 15) are provided for sensing quality parameters of the moving strip and are connected to the evaluation arrangement.

14. Apparatus according to any of claims 7 to 13, characterized in that the evaluating arrangement is a micro-computer (8).

15. Apparatus according to claim 14, characterized in that the micro-computer further comprises the control arrangement for the low pressure or the constant amount of air.

16. Apparatus according to any of claims 7 to 15, characterized in that a filter (18) is provided between the measuring chamber (4) and the measuring arrangement for measuring the amount of air flow.

9

FIG. 1

# FIG. 2

EP 0 243 427 B1